# EUROPEAN PATENT SPECIFICATION

(11) **EP 2 110 038 B1**
(45) Date of publication and mention of the grant of the patent: **12.10.2011**
(21) Application number: 08360008.0
(22) Date of filing: 14.04.2008
(51) Int. Cl.: A44B 11/25, A01K 27/00

(54) **Safety buckle**
Sicherheitsschnalle
Boucle de sécurité

(43) Date of publication of application: 21.10.2009
(73) Proprietor: Lin, Pei Chuan, Taichung City 40360 (TW)
(72) Inventor: Lin, Pei Chuan, Taichung City 40360 (TW)
(74) Representative: Metz, Paul

(56) References cited:
- US-B2- 7 069 625

## Description

### BACKGROUND OF THE INVENTION

### 1. Field of the Invention

The present invention relates to buckles and more particularly, to a safety buckle that can be automatically unlocked when received a stretching force within a predetermined range of angles.

### 2. Description of the Related Art

U.S. Patent No. 7,069,625 discloses a safety buckle **60** shown in FIG. 1 of the present application. According to this design, the safety buckle **60** comprises a first female buckle member **80a,** a second female buckle member **80b,** and a male buckle member **70.** The male buckle member **70** has two plug units **71 a** and **71 b** respectively inserted into the receiving open chamber **81a** of a first female buckle member **80a** and the receiving open chamber **81b** of a second female buckle member **80b.** Each plug unit **71a** and **71 b** has two raised engagement portions **72a** and **72b** respectively protruded from the top and bottom sides for engaging respective recessed engagement portions **82a** and **82b** of the respective female buckle members **80a** and **80b** respectively.

The aforesaid safety buckle **60** is for use in a collar for cat. The collar can automatically be unfastened if the collar is detained by an object during jumping of the cat, preventing a hurt to the cat. In other words, the safety buckle is automatically unlocked to unfasten the collar from the cat for letting the cat go freely without hurt when the collar received a stretching force over the limited range (normally about 10 lbs or 5 kgs). A collar for cat is normally used for holding a nameplate, bell, or any of a variety of ornamental devices.

Because the female buckle members **80a** and **80b** of the aforesaid safety buckle **60** are not rotatable relative to the male buckle member **70,** the safety buckle **60** can be easily unlocked only when the collar receives a stretching force in parallel to the direction of the central axis **75** extending through the safety buckle **60,** i.e., the safety buckle **60** can be unlocked only when stretched in a particular angle. Therefore, the safety level of this design of safety buckle is not high.

### SUMMARY OF THE INVENTION

The present invention has been accomplished under the circumstances in view. It is the main object of the present invention to provide a safety buckle, which can be automatically unlocked when received a stretching force within a predetermined range of angles, assuring safety.

To achieve this and other objects and according to one embodiment of the present invention, the safety buckle member is comprised of an intermediate buckle member, a first connecting buckle member, and a second connecting buckle member. The intermediate buckle member comprises a first receiving hole and a second receiving hole disposed at two opposite sides, and at least one smoothly arched groove formed in each of the first receiving hole and the second receiving hole. The first connecting buckle member comprises a first plug insertable into the first receiving hole of the intermediate buckle member, and at least one raised portion protruded from the first plug for engaging the at least one smoothly arched groove in the first receiving hole to secure the first connecting buckle member to the intermediate buckle member after insertion of the first plug of the first connecting buckle member into the first receiving hole of the intermediate buckle member for allowing the first connecting buckle member to be biased relative to the intermediate buckle member along the at least one smoothly arched groove in the first receiving hole within a predetermined angle. The second connecting buckle member comprises a second plug insertable into the second receiving hole of the intermediate buckle member, and at least one raised portion protruded from the second plug for engaging the at least one smoothly arched groove in the second receiving hole to secure the second connecting buckle member to the intermediate buckle member after insertion of the second plug of the second connecting buckle member into the second receiving hole of the intermediate buckle member for allowing the second connecting buckle member to be biased relative to the intermediate buckle member along the at least one smoothly arched groove in the second receiving hole within a predetermined angle.

In an alternate form of the present invention, the safety buckle is comprised of an intermediate buckle member, a first connecting buckle member, and a second connecting buckle member. The intermediate buckle member comprises a first plug and a second plug disposed at two opposite sides, and at least one raised portion protruded from each of the first plug and the second plug. The first connecting buckle member comprises a base and a first connection unit forwardly extending from the base. The first connection unit of the first connecting buckle member has a first receiving hole defined therein and at least one smoothly arched groove formed in the first receiving hole for receiving the at least one raised portion at the first plug to secure the first connecting buckle member to the intermediate buckle member for allowing the first connecting buckle member to be biased relative to the intermediate buckle member within a predetermined angle after insertion of the first plug into the first receiving hole of the first connection unit of the fist connecting buckle member. The second connecting buckle member comprises a base and a second connection unit forwardly extending from the base. The second connection unit of the second connecting buckle member has a second receiving hole defined therein and at least one smoothly arched groove formed in the second receiving hole for receiving the at least one raised portion of the second plug to secure the second connecting buckle member to the intermediate buckle member for allowing the second connecting buckle member to be biased relative to the intermediate buckle member within a predetermined angle after insertion of the second plug into the second receiving hole of the second connection unit of the second connecting buckle member.

### BRIEF DESCRIPTION OF THE DRAWINGS

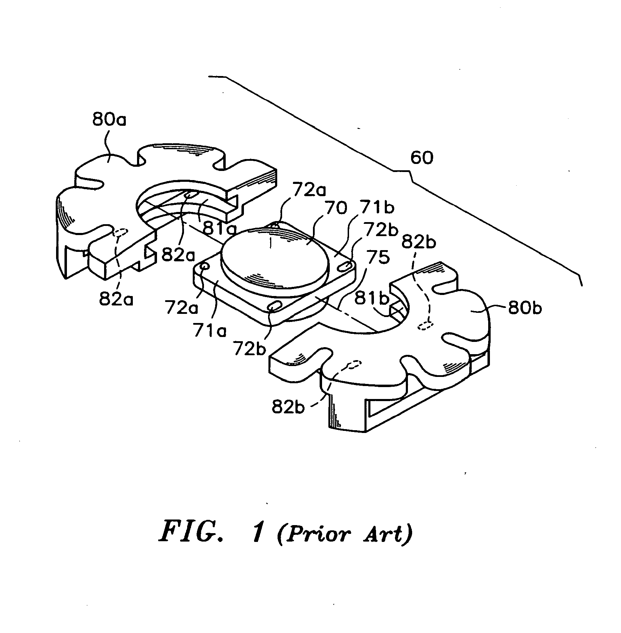

FIG. 1 is an exploded view of a safety buckle according to the prior art.
FIG. 2 is an elevational assembly view of a safety buckle in accordance with a first embodiment of the present invention.
FIG. 3 is an exploded view of the safety buckle in accordance with the first embodiment of the present invention.
FIG. 4 is a top view of the safety buckle in accordance with a first embodiment of the present invention.
FIG. 5 is a sectional view taken along line 5-5 of FIG. 4.
FIG. 6 is a top view of the first embodiment of the present invention, showing the first and second female buckle members biased horizontally to the limited range in one direction relative to the male buckle member.
FIG. 7 is a top view of the first embodiment of the present invention, showing the first and second female buckle members biased horizontally to the limited range in the other direction relative to the male buckle member.
FIG. 8 is an elevational assembly view of a safety buckle in accordance with a second embodiment of the present invention.
FIG. 9 is an exploded view of the safety buckle in accordance with the second embodiment of the present invention.
FIG. 10 is a top view of the safety buckle in accordance with the second embodiment of the present invention.
FIG. 11 is a sectional view taken along line 11-11 of FIG. 10.
FIG. 12 is a top view of the second embodiment of the present invention, showing the first and second female buckle members turned in one direction relative to the male buckle member to the limited range.
FIG. 13 is a top view of the second embodiment of the present invention, showing the first and second female buckle members turned in the other direction relative to the male buckle member to the limited range.

### DETAILED DESCRIPTION OF THE PREFERRED EMBODIMENT

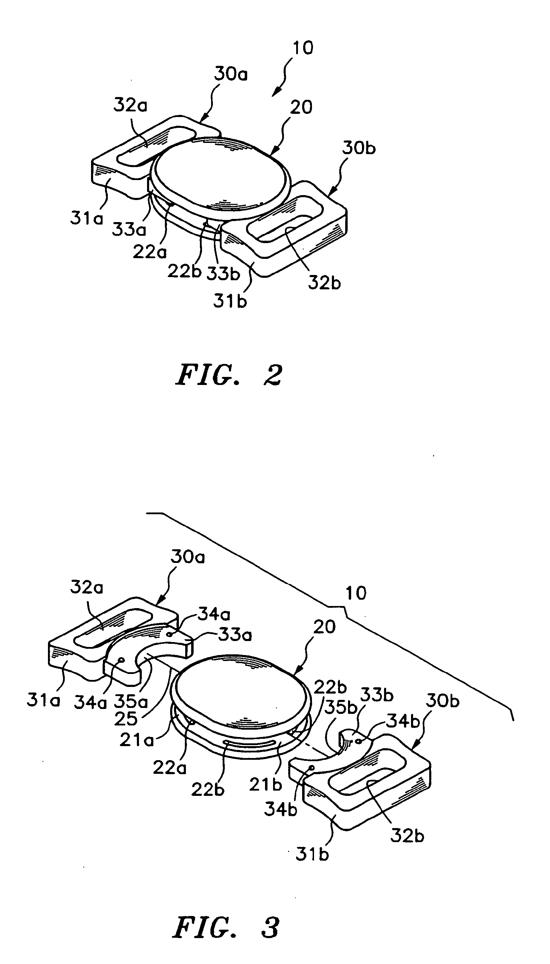

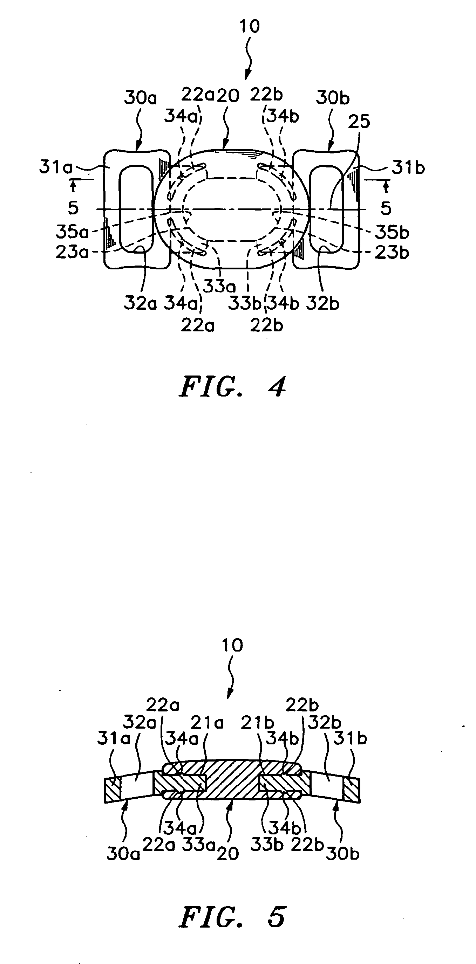

Referring to FIGS. 2 through 5, a safety buckle **10** in accordance with a first embodiment of the present invention is shown comprised of an intermediate buckle member **20.** The intermediate buckle member **20** comprises a first receiving hole **21 a** and a second receiving hole **21 b** symmetrically provided at two opposite sides, two symmetrical pairs of smoothly arched grooves **22a** and **22b** respectively formed in each of the first and second receiving holes **21 a** and **21 b** and bilaterally disposed at the top and bottom sides, i.e., there are four smoothly arched grooves **22a** and **22b** in each of the first and second receiving hole **21a** and **21b.** Actually, the two symmetrical smoothly arched grooves **22a** and **22b** on one same plane in one receiving hole **21a** and **21 b** can be joined into one single smoothly arched groove.

The safety buckle **10** further comprises a first connecting buckle member **30a,** and a second connecting buckle member **30b.** The first connecting buckle member **30a** comprises a base **31a,** a belt hole **32a** cut through the top and bottom sides of the base **31a** for the insertion of one end of a fabric belt (not shown), a plug **33a** forwardly extending from the base **31a** for insertion into the first receiving hole **21a** of the intermediate buckle member **20,** and a plurality of raised portions **34a** respectively protruded from the top and bottom sides of the plug **33a.** According to this embodiment, the plug **33a** has two raised portions **34a** protruded from each of the top and bottom sides and symmetrically arranged at two sides, i.e., the plug **33a** has totally four raised portions **34a** respectively coupled to the smoothly arched grooves **22a** in the first receiving hole **21 a** so that the first connecting buckle member **30a** is biasable horizontally relative to the intermediate buckle member **20** within a predetermined angle.

The second connecting buckle member **30b** has a structure same as the first connecting buckle member **30a,** comprising a base **31 b,** a belt hole **32b** cut through the top and bottom sides of the base **31 b** for the insertion of the other end of the fabric belt (not shown), a plug **33a** forwardly extending from the base **31a** for insertion into the second receiving hole **21b** of the intermediate buckle member **20,** and a plurality of raised portions **34b** respectively protruded from the top and bottom wall of the plug **33b** for coupling to the smoothly arched grooves **22b** in the second receiving hole **21 b** of the intermediate buckle member **20** for allowing the second connecting buckle member **30b** to be biased horizontally relative to the intermediate buckle member **20** within a predetermined angle.

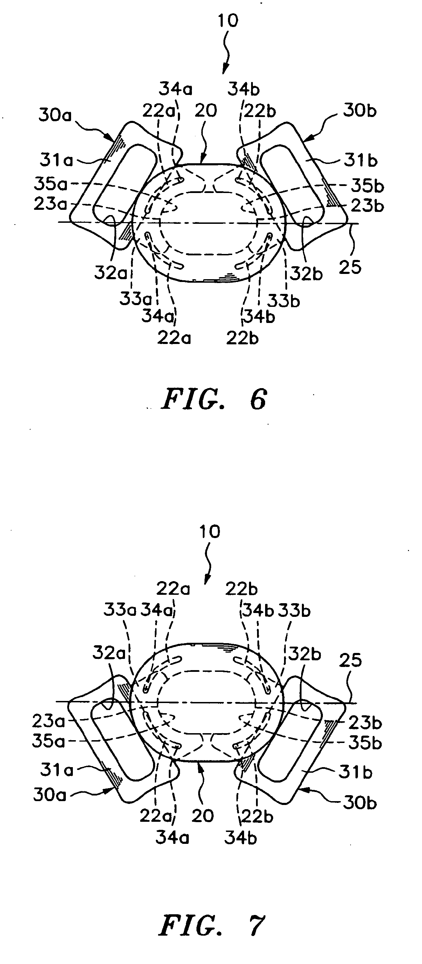

To support horizontal biasing of the first connecting buckle member **30a** and the second connecting buckle member **30b** relative to the intermediate buckle member **20,** the plug **33a** and **33b** has a female bearing portion **35a** and **35b** smoothly curved inwards at the front side; the intermediate buckle member **20** has a male bearing portion **23a** and **23b** smoothly curved outwards on the inside in each of the first and second receiving hole **21 a** and **21 b.** When the first connecting buckle member **30a** and the second connecting buckle member **30b** are fastened to the intermediate buckle member **20,** the male bearing portions **23a** and **23b** of the plugs **33a** and **33b** match the female bearing portions **35a** and **35b,** allowing the first connecting buckle member **30a** and the second connecting buckle member **30b** to be biased horizontally relative to the intermediate buckle member **20** within about 60°, i.e. biased at 30° clockwise as well as counter-clockwise relative to the zero-degree central axis **25.** FIGS. 6 and 7 show the first connecting buckle member **30a** and the second connecting buckle member **30b** biased horizontally to the limited angle relative to the intermediate buckle member **20** in two reversed directions.

Further, the intermediate buckle member **20** can be made having the smoothly arched grooves **22a** and **22b** formed in the first and second receiving holes **21a** and **21b** only at the top or bottom side. Under this condition, the first and second connecting buckle member **30a** and **30b** has the respective raised portions **34a** and **34b** provided at the top or bottom side of the plug **33a** and **33b.** However, it is preferable to have this first embodiment made in the form shown in FIGS. 2 through 5.

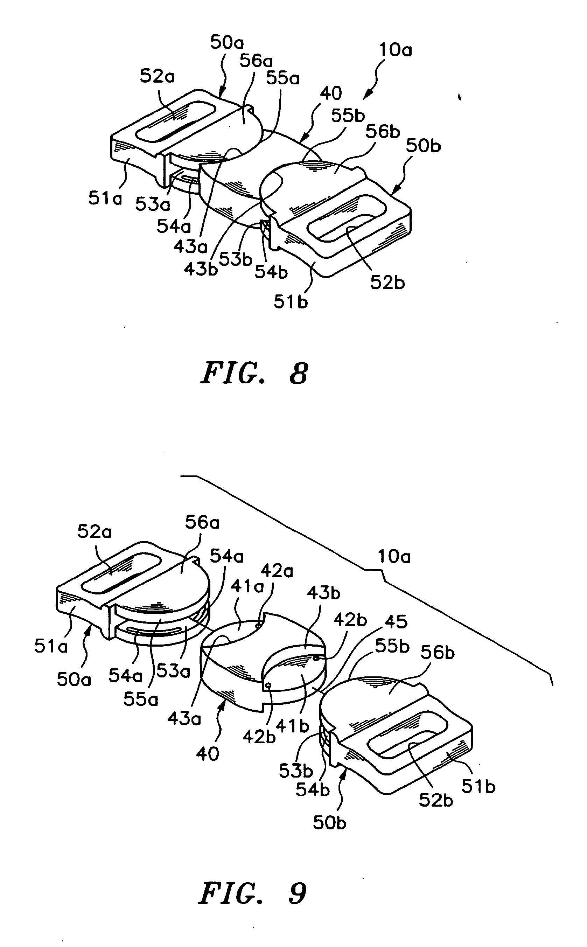

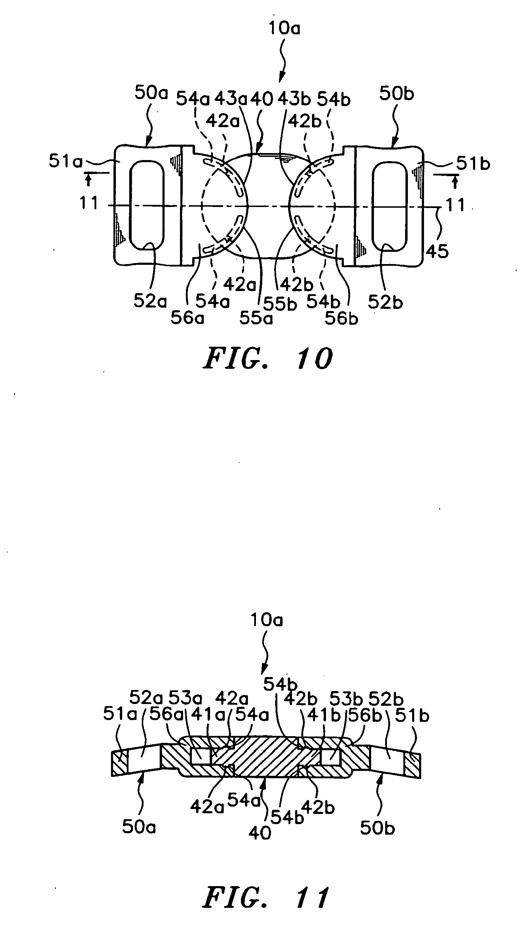

The invention is not limited to the aforesaid first embodiment. The safety buckle may be made in any other alternate forms. For example, the first and second receiving hole **21a** and **21 b** of the intermediate buckle member **20** may be exchanged for the plugs **33a** and **33b** of the first and second connecting buckle members **30a** and **30b,** achieving the same effect of the aforesaid first embodiment. FIGS. 8 through 11 show a safety buckle **10a** in accordance with a second embodiment of the present invention. According to this second embodiment, the intermediate buckle member **40** of the safety buckle **10a** comprises a first plug **41a** and a second plug **41 b** symmetrically disposed at two sides. Each plug **41a** and **41b** has two raised portions **42a** and **42b** protruded from each of the top and bottom sides thereof.

The first connecting buckle member **50a** comprises a base **51a,** which has a belt hole **52a** cut through its top and bottom sides, and a connection unit **56a** forwardly extending from the base **51a.** The connection unit **56a** has a receiving hole **53a** defined therein for the insertion of the first plug **41 a** of the intermediate buckle member **40,** and two symmetrical pairs of smoothly arched grooves **54a** respectively bilaterally disposed at the top and bottom sides inside the receiving hole **53a.** The smoothly arched grooves **54a** receive the raised portions **42a** of the first plug **41a** of the intermediate buckle member **40** after insertion of the first plug **41a** of the intermediate buckle member **40** into the receiving hole **53a** of the connection unit **56a** of the first connecting buckle member **50a,** allowing the first connecting buckle member **50a** to be biased horizontally relative to the intermediate buckle member **40** within a predetermined angle.

The second connecting buckle member **50b** comprises a base **51 b,** which has a belt hole **52b** cut through its top and bottom sides, and a connection unit **56b** forwardly extending from the base **51 b.** The connection unit **56b** has a receiving hole **53b** defined therein for the insertion of the second plug **41 b** of the intermediate buckle member **40,** and two symmetrical pairs of smoothly arched grooves **54b** respectively bilaterally disposed at the top and bottom sides inside the receiving hole **53b.** The smoothly arched grooves **54b** receive the raised portions **42b** of the second plug **41b** of the intermediate buckle member **40** after insertion of the second plug **41b** of the intermediate buckle member **40** into the receiving hole **53b** of the connection unit **56b** of the second connecting buckle member **50b**, allowing the second connecting buckle member **50b** to be biased horizontally relative to the intermediate buckle member **40** within a predetermined angle.

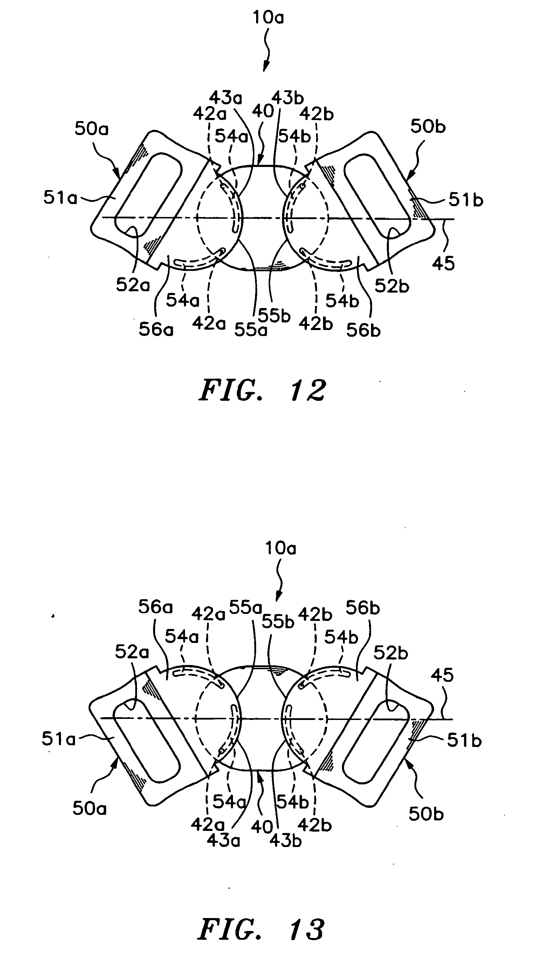

To support horizontal biasing of the first connecting buckle member **50a** and the second connecting buckle member **50b** relative to the intermediate buckle member **40,** the intermediate buckle member **40** has female bearing portions **43a** and **43b** smoothly curved inwards and respectively at the top and bottom sides of the first and second plugs **41 a** and **41b;** the first and second connecting buckle members **50a** and **50b** each have two male bearing portions **55a** and **55b** smoothly curved outwards at the top and bottom sides relative to the respective receiving hole **53a** and **53b.** When the first connecting buckle member **50a** and the second connecting buckle member **50b** are fastened to the intermediate buckle member **40,** the female bearing portions **43a** and **43b** of the intermediate buckle member **40** match the male bearing portions **55a** and **55b** of the first and second connecting buckle members **50a** and **50b,** allowing the first connecting buckle member **50a** and the second connecting buckle member **50b** to be biased horizontally relative to the intermediate buckle member **40** within a predetermined angle, for example, 60°, i.e. biased at 30° clockwise as well as counter-clockwise relative to the zero-degree central axis **45.** FIGS. 12 and 13 show the first connecting buckle member **50a** and the second connecting buckle member **50b** biased horizontally to the limited angle relative to the intermediate buckle member **40** in two reversed directions.

As stated above, the first connecting buckle member **30a(50a)** and the second connecting buckle member **30b(50b)** of the safety buckle **10(10a)** are biasable horizontally relative to the intermediate buckle member **20(40)** within about 60°. Therefore, the safety buckle **10(10a)** is automatically unlocked when received a stretching force within this angle. When compared with the aforesaid prior art design that can be unlocked only with receives a stretching force in a particular angle.

Although particular embodiments of the invention have been described in detail for purposes of illustration, various modifications and enhancements may be made without departing from the scope of the invention as defined by the claims.

## Claims

1. A safety buckle **(10),** comprising:
an intermediate buckle member **(20),** said intermediate buckle member **(20)** comprising a first receiving hole **(21a)** disposed at a first side thereof, a second receiving hole **(21b)** disposed at a second side thereof opposite to said first side, and at least one smoothly arched groove **(22a, 22b)** formed in each of said first receiving hole **(21a)** and said second receiving hole **(21b);**
a first connecting buckle member **(30a),** said first connecting buckle member **(30a)** comprising a first plug **(33a)** insertable into said first receiving hole **(21a)** of said intermediate buckle member **(20),** the first plug **(33a)** of said first connecting buckle member **(30a)** having at least one raised portion **(34a)** for engaging the at least one smoothly arched groove **(22a)** in said first receiving hole **(21a)** to secure said first connecting buckle member **(30a)** to said intermediate buckle member **(20)** after insertion of the first plug **(33a)** of said first connecting buckle member **(30a)** into said first receiving hole **(21a)** of said intermediate buckle member **(20)** for allowing said first connecting buckle member **(30a)** to be biased relative to said intermediate buckle member **(20)** along the at least one smoothly arched groove **(22a)** in said first receiving hole **(21a)** within a predetermined angle; and
a second connecting buckle member **(30b),** said second connecting buckle member **(30b)** comprising a second plug **(33b)** insertable into said second receiving hole **(21b)** of said intermediate buckle member **(20),** the second plug **(33b)** of said second connecting buckle member **(30b)** having at least one raised portion **(34b)** for engaging the at least one smoothly arched groove **(22b)** in said second receiving hole **(21b)** to secure said second connecting buckle member **(30b)** to said intermediate buckle member **(20)** after insertion of the second plug **(33b)** of said second connecting buckle member **(30b)** into said second receiving hole **(21b)** of said intermediate buckle member **(20)** for allowing said second connecting buckle member **(30b)** to be biased relative to said intermediate buckle member **(20)** along the at least one smoothly arched groove **(22b)** in said second receiving hole **(21b)** within a predetermined angle.

2. The safety buckle **(10)** as claimed in claim 1, wherein the first plug **(33a)** of said first connecting buckle member **(30a)** and the second plug **(33b)** of said second connecting buckle member **(30b)** each have an inwardly curved bearing portion **(35a, 35b);** said intermediate buckle member **(20)** has two outwardly curved bearing portions **(23a, 23b)** respectively suspending inside said first receiving hole **(21a)** and said second receiving hole **(21b)** for abutting against the inwardly curved bearing portions **(35a, 35b)** of the plugs **(33a, 33b)** of said first connecting buckle member **(30a)** and said second connecting buckle member **(30b)** upon insertion of the first plug **(33a)** of said first connecting buckle member **(30a)** and the second plug **(33b)** of said second connecting buckle member **(30b)** into said first receiving hole **(21a)** and said second receiving hole **(21b)** of said intermediate buckle member **(20).**

3. The safety buckle **(10)** as claimed in claim 1, wherein the number of said at least one smoothly arched groove **(22a, 22b)** and the number of said at least one raised portion **(34a, 34b)** are two, and the two smoothly arched grooves **(22a, 22b)** and the two raised portions **(34a, 34b)** are symmetrically disposed at two opposite lateral sides.

4. The safety buckle **(10)** as claimed in claim 1, wherein said first plug **(33a)** and said second plug **(33b)** each have a top side and a bottom side, and one of said raised portions **(34a**, **34b)** of each of said first plug **(33a)** and said second plug **(33b)** is disposed at each of the respective top side and bottom side; said first receiving hole **(21a)** and said second receiving hole **(21b)** each has a top side and a bottom side, and one of said smoothly arched grooves **(22a, 22b)** of said intermediate buckle member **(20)** is disposed in the top side and bottom side of each of said first receiving hole **(21a)** and said second receiving hole **(21b)**.

5. The safety buckle **(10)** as claimed in claim 4, wherein the at least one raised portion **(34a, 34b)** includes two raised portions **(34a, 34b)** bilaterally disposed on each of the respective top side and bottom side, and the at least one smoothly arched groove **(22a, 22b)** includes two smoothly arched grooves **(22a, 22b)** bilaterally disposed at each of the respective top side and bottom side.

6. The safety buckle **(10)** as claimed in claim 1, wherein said predetermined angle is 60 degrees angle.

7. A safety buckle **(10a),** comprising:
an intermediate buckle member **(40),** said intermediate buckle member **(40)** comprising a first plug **(41a)** disposed at a first side thereof and a second plug **(41b)** disposed at a second side thereof opposite to said first side, said first plug **(41a)** and said second plug **(41b)** each having at least one raised portion **(42a, 42b);**
a first connecting buckle member **(50a),** said first connecting buckle member **(50a)** comprising a base **(51a)** and a first connection unit **(56a)** forwardly extending from the base **(51a),** the first connection unit **(56a)** of said first connecting buckle member **(50a)** having a first receiving hole **(53a)** defined therein and at least one smoothly arched groove **(54a)** formed in the first receiving hole **(53a)** for receiving the at least one raised portion **(42a)** of said first plug **(41a)** to secure said first connecting buckle member **(50a)** to said intermediate buckle member **(40)** for allowing said first connecting buckle member **(50a)** to be biased relative to said intermediate buckle member **(40)** within a predetermined angle after insertion of said first plug **(41a)** into the first receiving hole **(53a)** of the first connection unit **(56a)** of said fist connecting buckle member **(50a);** and
a second connecting buckle member **(50b),** said second connecting buckle member **(50b)** comprising a base **(51b)** and a second connection unit **(56b)** forwardly extending from the base **(51b)**, the second connection unit **(56b)** of said second connecting buckle member **(50b)** having a second receiving hole **(53b)** defined therein and at least one smoothly arched groove **(54b)** formed in the second receiving hole **(53b)** for receiving the at least one raised portion **(42b)** of said second plug **(41b)** to secure said second connecting buckle member **(50b)** to said intermediate buckle member **(40)** for allowing said second connecting buckle member **(50b)** to be biased relative to said intermediate buckle member **(40)** within a predetermined angle after insertion of said second plug **(41b)** into the second receiving hole **(53b)** of the second connection unit **(56b)** of said second connecting buckle member **(50b).**

8. The safety buckle member **(10a)** as claimed in claim 7, wherein said intermediate buckle member **(40)** comprises a plurality of inwardly curved bearing portions **(43a, 43b)** respectively disposed at top and bottom sides of said first plug **(41a)** and said second plug **(41b);** the first connection unit **(56a)** of said first connecting buckle member **(50a)** and the second connection unit **(56b)** of said second connecting buckle member **(50b)** each have an outwardly curved bearing portion **(55a, 55b)** which is respectively abutted against the inwardly curved bearing portions **(43a, 43b)** of said intermediate buckle member **(40)** when said first plug **(41a)** and said second plug **(41b)** of said intermediate buckle member **(40)** are respectively inserted into the first receiving hole **(53a)** of said first connecting buckle member **(50a)** and the second receiving hole **(53b)** of said second connecting buckle member **(50b).**

9. The safety buckle **(10a)** as claimed in claim 7, wherein the number of said at least one smoothly arched groove **(54a, 54b)** and the number of said at least one raised portion **(42a, 42b)** are two, and the two smoothly arched grooves **(54a, 54b)** and the two raised portions **(42a, 42b)** are symmetrically disposed at two opposite lateral sides.

10. The safety buckle **(10a)** as claimed in claim 7, wherein said first plug **(41a)** and said second plug **(42b)** each have a top side and a bottom side, and one of said raised portions **(42a, 42b)** of each of said first plug **(41a)** and said second plug **(41 b)** is disposed at each of the respective top side and bottom side; said first receiving hole **(53a)** and said second receiving hole **(53b)** each has a top side and a bottom side, and one of said smoothly arched grooves **(54a, 54b)** of said first connecting buckle member **(50a)** and said second connecting buckle member **(50b)** is disposed in the top side and bottom side of each of said first receiving hole **(53a)** and said second receiving hole **(53b).**

11. The safety buckle **(10a)** as claimed in claim 10, wherein the at least one raised portion **(42a, 42b)** includes two raised portions **(42a, 42b)** bilaterally disposed on each of the respective top side and bottom side, and the at least one smoothly arched groove **(54a, 54b)** includes two smoothly arched grooves **(54a, 54b)** bilaterally disposed at each of the respective top side and bottom side.

12. The safety buckle **(10a)** as claimed in claim 7, wherein said predetermined angle is 60 degrees angle.

## Patentansprüche

1. Sicherheitsschnalle (10) mit:
einem Zwischenschnallenteil (20) mit einer ersten Aufnahmebohrung (21a) an seiner ersten Seite und einer zweiten Aufnahmebohrung (21b) an seiner zweiten Seite
gegenüber der ersten Seite, und mindestens eine sanft gebogene Nut (22a; 22b),
die in der ersten Aufnahmebohrung (21 a) und der zweiten Aufnahmebohrung (21b) gebildet ist;
einem ersten Verbindungsschnallenteil (30a), das einen ersten Stopfen (33a) aufweist, der in die erste Aufnahmebohrung (21a) des Zwischenschnallenteils (20) einsteckbar ist, wobei der erste Stopfen (33a) des ersten Verbindungsschnallenteils (30a) ein angehobenes Teilstück (34a) aufweist, damit die mindestens eine sanft gebogene Nut (22a) in die erste Aufnahmebohrung (21a) eingreifen kann, um besagtes erstes Verbindungsschnallenteil (30a) an besagtem Zwischenschnallenteil (20) zu befestigen, nach Einfügung des ersten Stopfens (33a) des ersten Verbindungsschnallenteils (30a) in besagte erste Aufnahmebohrung (21a) des Zwischenschnallenteils (20), damit das erste Verbindungsschnallenteil (30a) in bezug auf besagtes Zwischenschnallenteil (20) entlang der mindestens einen sanft gebogenen Nut (22a) in besagter erster Aufnahmebohrung (21 a) innerhalb eines vorherbestimmten Winkels vorgespannt ist; und
einem zweiten Verbindungsschnallenteil (30b), das einen zweiten Stopfen (33b) aufweist, der in die zweite Aufnahmebohrung (21b) des Zwischenschnallenteils (20) einsteckbar ist, wobei der zweite Stopfen (33b) des zweiten Verbindungsschnallenteils (30b) ein angehobenes Teilstück (34b) aufweist, damit die mindestens eine sanft gebogene Nut (22b) in die zweite Aufnahmebohrung (21b) eingreifen kann, um das zweite Verbindungsschnallenteil (30b) an dem Zwischenschnallenteil (20) zu befestigen,
nach Einfügung des zweiten Stopfens (33b) des zweiten Verbindungsschnallenteils (30b) in die zweite Aufnahmebohrung (21b) des Zwischenschnallenteils (20), damit das zweite Verbindungsschnallenteil (30b) in bezug auf das Zwischenschnallenteil (20) entlang der mindestens einen sanft gebogenen Nut (22b) in der zweiten Aufnahmebohrung (21b) innerhalb eines vorherbestimmten Winkels vorgespannt ist.

2. Sicherheitsschnalle (10) nach Anspruch 1, wobei der erste Stopfen (33a) des ersten Verbindungsschnallenteils (30a) und der zweite Stopfen (33b) des zweiten Verbindungsschnallenteils (30b) je einen nach innen gebogenen Lagerabschnitt (35a; 35b) aufweisen; das Zwischenschnallenteil (20) hat zwei außen gebogene Lagerabschnitte (23a; 23b), die in der ersten Aufnahmebohrung (21 a) und der zweiten Aufnahmebohrung (21b) hängen, zum Anschlagen gegen die nach innen gebogenen Lagerabschnitte (35a; 35b) der Stopfen (33a, 33b) des ersten Verbindungsschnallenteils (30a) und des zweiten Verbindungsschnallenteils (30b) nach Einfügung des ersten Stopfens (33a) des ersten Verbindungsschnallenteils (30a) und des zweiten Stopfens (33b) des zweiten Verbindungsschnallenteils (30b) in die erste Aufnahmebohrung (21a) und die zweite Aufnahmebohrung (21b) des Zwischenschnallenteils (20).

3. Sicherheitsschnalle (10) nach Anspruch 1, wobei die Zahl der mindestens einen sanft gebogenen Nut (22a; 22b) und die Zahl des mindestens einen angehobenen Teilstücks (34a, 34b) zwei beträgt, und die beiden sanft gebogenen Rillen (22a; 22b) und die beiden angehobenen Teilstücke (34a, 34b) symmetrisch an zwei gegenüberliegenden Seiten angeordnet sind.

4. Sicherheitsschnalle (10) nach Anspruch 1, wobei der erste Stopfen (33a) und der zweite Stopfen (33b) je eine Oberseite und eine Unterseite haben, und eines der Teilstücke (34a; 34b) des ersten Stopfens (33a) und des zweiten Stopfens (33b) an der betreffenden Oberseite und Unterseite angeordnet ist; die erste Aufnahmebohrung (21a) und die zweite Aufnahmebohrung (21b) haben je eine Oberseite und eine Unterseite, und sanft gebogene Rillen (22a; 22b) des Zwischenschnallenteils (20) sind an der Ober- und Unterseite der ersten Aufnahmebohrung (21a) und der zweiten Aufnahmebohrung (21b) angeordnet.

5. Sicherheitsschnalle (10) nach Anspruch 4, wobei das mindestens eine angehobene Teilstück (34a; 34b) zwei angehobene Teilstücke (34a, 34b) umfasst, die an der betreffenden Oberseite und Unterseite an beiden Seiten angeordnet sind, und die mindestens eine sanft gebogene Nut (22a; 22b) umfasst zwei sanft gebogene Rillen (22a, 22b), die an der betreffenden Oberseite und Unterseite an beiden Seiten angeordnet sind.

6. Sicherheitsschnalle (10) nach Anspruch 1, wobei der vorherbestimmte Winkel ein 60 Grad-Winkel ist.

7. Sicherheitsschnalle (b a) mit:
einem Zwischenschnallenteil (40), das einen ersten Stopfen (41 a) aufweist, der an einer ersten Seite davon angeordnet ist, und einen zweiten Stopfen (41b), der an einer zweiten Seite davon gegenüber der ersten Seite angeordnet ist, wobei der erste Stopfen (41a) und der zweite Stopfen (41b) je ein angehobenes Teilstück (42a, 42b) aufweisen;
einem ersten Verbindungsschnallenteil (50a), das eine Basis (51a) und eine erste Verbindungseinheit (56a) umfasst, die von der Basis (51a) nach vorn verläuft,
wobei die erste Verbindungseinheit (56a) des ersten Verbindungsschnallenteils (50a) eine erste Aufnahmebohrung (53a) umfasst, die darin ausgebildet ist, und mindestens eine sanft gebogene Nut (54a) in der ersten Aufnahmebohrung (53a) zur Aufnahme des mindestens einen angehobenen Teilstücks (42a) des ersten Stopfens (41a), um das erste Verbindungsschnallenteil (50a) an dem Zwischenschnallenteil (40) zu befestigen, damit das erste Verbindungsschnallenteils (50a) in bezug auf das Zwischenschnallenteil (40) innerhalb eines vorherbestimmten Winkels vorgespannt ist, nach Einfügung des ersten Stopfens (41a) in die erste Aufnahmebohrung (53a) der ersten Verbindungseinheit (56a) des ersten Verbindungsschnallenteils (50a); und
einem zweiten Verbindungsschnallenteil (50b) mit einer Basis (51b) und einer zweiten Verbindungseinheit (56b), die von der Basis (51 b) nach vorn verläuft, wobei die zweite Verbindungseinheit (56b) des zweiten Verbindungsschnallenteils (50b) eine zweite Aufnahmebohrung (53b) aufweist, die darin ausgebildet ist, und mindestens eine sanft gebogene Nut (54b) in der zweiten Aufnahmebohrung (53b) zur Aufnahme des mindestens einen angehobenen Teilstücks (42b) des zweiten Stopfens (41 b), um das zweite Verbindungsschnallenteil (50b) an dem Zwischenschnallenteil (40) zu befestigen, damit das zweite Verbindungsschnallenteil (50b) in bezug auf das Zwischenschnallenteil (40) innerhalb eines vorherbestimmten Winkels vorgespannt ist, nach Einfügung des zweiten Stopfens (41b) in die zweite Aufnahmebohrung (53b) der zweiten Verbindungseinheit (56b) des zweiten Verbindungsschnallenteils (50b).

8. Sicherheitsschnallenteil (10a) nach Anspruch 7, wobei das Zwischenschnallenteil (40) eine Vielzahl von nach innen gebogenen Lagerabschnitten (43a; 43b) an der Ober- bzw. Unterseite des ersten Stopfens (41a) und des zweiten Stopfens (41b) umfasst; wobei die erste Verbindungseinheit (56a) des ersten Verbindungsschnallenteils (50a) und die zweite Verbindungseinheit (56b) des zweiten Verbindungsschnallenteils (50b) je einen nach außen gebogenen Lagerabschnitt (55a; 55b) aufweisen, der gegen die nach innen gebogenen Lagerabschnitte (43a, 43b) des Zwischenschnallenteils (40) anschlägt, wenn der erste Stopfen (41a) und der zweite Stopfen (41b) des Zwischenschnallenteils (40) in die erste Aufnahmebohrung (53a) des ersten Verbindungsschnallenteils (50a) und die zweite Aufnahmebohrung (53b) des zweiten Verbindungsschnallenteils (50b) eingefügt sind.

9. Sicherheitsschnalle (10a) nach Anspruch 7, wobei die Zahl der mindestens einen sanft gebogenen Nut (54a; 54b) und die Zahl des mindestens einen angehobenen Teilstücks (42a, 42b) zwei beträgt, und die beiden sanft gebogenen Nuten (54a; 54b) und die beiden angehobenen Teilstücke (42a, 42b) symmetrisch an zwei gegenüberliegenden Seiten angeordnet sind.

10. Sicherheitsschnalle (10a) nach Anspruch 7, wobei der erste Stopfen (41a) und der zweite Stopfen (42b) je eine Oberseite und eine Unterseite haben, und eines der angehobenen Teilstücke (42a; 42b) des ersten Stopfens (41 a) und zweiten Stopfens (41b) ist je an der betreffenden Ober- und Unterseite angeordnet; die erste Aufnahmebohrung (53a) und die zweite Aufnahmebohrung (53b) haben je eine Oberseite und eine Unterseite, und eine der sanft gebogenen Nuten (54a 54b) des ersten Verbindungsschnallenteils (50a) und des zweiten Verbindungsschnallenteils (50b) ist an der Ober- und Unterseite der ersten Aufnahmebohrung (53a) und der zweiten Aufnahmebohrung (53b) angeordnet.

11. Sicherheitsschnalle (10a) nach Anspruch 10, wobei das mindestens eine angehobene Teilstück (42a; 42b) zwei angehobene Teilstücke (42a, 42b) umfasst, die an der betreffenden Ober- und Unterseite an beiden Seiten angeordnet sind, und die mindestens eine sanft gebogene Nut (54a; 54b) umfasst zwei sanft gebogene Nuten (54a, 54b), die an der betreffenden Ober- und Unterseite an beiden Seiten angeordnet sind.

12. Sicherheitsschnalle (10a) nach Anspruch 7, wobei der vorherbestimmte Winkel 60 Grad beträgt.

## Revendications

1. Boucle de sécurité (10), comprenant :
• un élément de boucle intermédiaire (20), ledit élément de boucle intermédiaire (20) présentant un premier orifice de réception (21a) prévu sur une première face de celui-ci, un second orifice de réception (21 b) prévu sur une seconde face en vis-à-vis de ladite première face, et au moins une gorge légèrement courbe (22a, 22b) conformée dans chacun desdits premier orifice de réception (21a) et second orifice de réception (21b) ;
• un premier élément de boucle de jonction (30a), ledit premier élément de boucle de jonction (30a) comportant une première fiche (33a) insérable dans ledit premier orifice de réception (21 a) dudit élément de boucle intermédiaire (20), la première fiche (33a) dudit premier élément de boucle de jonction (30a) présentant au moins une partie en saillie (34a) pour s'engager dans l'au moins une gorge légèrement courbe (22a) dans ledit premier orifice de réception (21 a) pour fixer ledit premier élément de boucle de jonction (30a) audit élément de boucle intermédiaire (20) après insertion de la première fiche (33a) dudit premier élément de boucle de jonction (30a) dans ledit premier orifice de réception (21 a) dudit élément de boucle intermédiaire (20) pour permettre au premier élément de boucle de jonction (30a) d'être déformé par rapport audit élément de boucle intermédiaire (20) le long de l'au moins une gorge légèrement courbe (22a) dans ledit premier orifice de réception (21 a) selon un angle prédéterminé ; et
• un second élément de boucle de jonction (30b), ledit second élément de boucle de jonction (30b) comportant une seconde fiche (33b) insérable dans ledit second orifice de réception (21 b) dudit élément de boucle intermédiaire (20), la seconde fiche (33b) dudit second élément de boucle de jonction (30b) présentant au moins une partie en saillie (34b) pour engager l'au moins une gorge légèrement courbe (22b) dans ledit second orifice de réception (21 b) pour fixer ledit second élément de boucle de jonction (30b) audit élément de boucle intermédiaire (20) après insertion de la seconde fiche (33b) dudit second élément de boucle de jonction (30b) dans ledit second orifice de réception (21 b) dudit élément de boucle intermédiaire (20) pour permettre au second élément de boucle de jonction (30b) d'être déformé par rapport audit élément de boucle intermédiaire (20) le long de l'au moins une gorge légèrement courbe (22b) dans ledit second orifice de réception (21 b) selon un angle prédéterminé.

2. Boucle de sécurité (10) selon la revendication 1, dans laquelle :
• la première fiche (33a) dudit premier élément de boucle de jonction (30a) et la seconde fiche (33b) dudit second élément de boucle de jonction (30b) présentent sont chacun une partie portante (35a, 35b) incurvée vers l'intérieur ;
• ledit élément de boucle intermédiaire (20) présente deux parties portantes (23a, 23b) incurvées vers l'extérieur suspendues respectivement à l'intérieur dudit premier orifice de réception (21 a) et à l'intérieur dudit second orifice de réception (21 b) pour être en butée contre les parties portantes (35a, 35b) incurvées vers l'intérieur des fiches (33a, 33b) dudit premier élément de boucle de jonction (30a) et dudit second élément de boucle de jonction (30b) lors de l'insertion de la première fiche (33a) dudit premier élément de boucle de jonction (30a) et de la seconde fiche (33b) dudit second élément de boucle de jonction (30b) dans ledit premier orifice de réception (21a) et ledit second orifice de réception (21 b) dudit élément de boucle intermédiaire (20).

3. Boucle de sécurité (10) selon la revendication 1, dans laquelle le nombre d'au moins une gorge légèrement courbe (22a, 22b) et le nombre d'au moins une partie en saillie (34a, 34b) sont égaux à deux, et dans laquelle les deux gorges légèrement courbes (22a, 22b) et les deux parties en saillies (34a, 34b) sont prévues de manière symétrique sur deux faces latérales opposées.

4. Boucle de sécurité (10) selon la revendication 1, dans laquelle ladite première fiche (33a) et ladite seconde fiche (33b) présentent chacune une face supérieure et une face inférieure, et dans laquelle une desdites parties en saillies (34a, 34b) de chacune desdites première fiche (33a) et seconde fiche (33b) est respectivement prévue sur chacune des faces supérieure et inférieure ; dans laquelle ledit premier orifice de réception (21 a) et ledit second orifice de réception (21 b) présentent chacun une face supérieure et une face inférieure, et dans laquelle une desdites gorges légèrement courbes (22a, 22b) dudit élément de boucle intermédiaire (20) est prévue dans la face supérieure et la face inférieure de chacun desdits premier orifice de réception (21a) et second orifice de réception (21 b).

5. Boucle de sécurité (10) selon la revendication 4, dans laquelle l'au moins une partie en saillie (34a, 34b) comprend deux parties en saillies (34a, 34b) prévues de manière bilatérale respectivement sur chacune des faces supérieure et inférieure, et dans laquelle l'au moins une gorge légèrement courbe (22a, 22b) comprend deux gorges légèrement courbes (22a, 22b) prévues de manière bilatérale respectivement au niveau de chacune des faces supérieure et inférieure.

6. Boucle de sécurité (10) selon la revendication 1, dans laquelle ledit angle prédéterminé est un angle de 60 degrés.

7. Boucle de sécurité (10a), comprenant :
• un élément de boucle intermédiaire (40), ledit élément de boucle intermédiaire (40) comportant une première fiche (41a) prévue sur un première face de celui-ci et une seconde fiche (41 b) prévue sur un seconde face de celui-ci en vis-à-vis de ladite première face, ladite première fiche (41 a) et ladite seconde fiche (41 b) présentant chacun au moins une partie en saillie (42a, 42b) ;
• un premier élément de boucle de jonction (50a), le premier élément de boucle de jonction (50a) comportant une base (51 a) et une première unité de raccordement (56a) s'étendant vers l'avant depuis la base (51a), la première unité de raccordement (56a) dudit premier élément de boucle de jonction (50a) présentant un premier orifice de réception (53a) délimité dans celui-ci et au moins une gorge légèrement courbe (54a) conformée dans le premier orifice de réception (53a) pour recevoir l'au moins une partie en saillie (42a) de ladite première fiche (41 a) pour fixer ledit premier élément de boucle de jonction (50a) audit élément de boucle intermédiaire (40) pour permettre au premier élément de boucle de jonction (50a) d'être déformé par rapport audit élément de boucle intermédiaire (40) selon un angle prédéterminé après insertion de ladite première fiche (41a) dans le premier orifice de réception (53a) de la première unité de raccordement (56a) dudit premier élément de boucle de jonction (50a) ; et
• un second élément de boucle de jonction (50b), le second élément de boucle de jonction (50b) comportant une base (51b) et une second unité de raccordement (56b) s'étendant vers l'avant depuis la base (51 b), la second unité de raccordement (56b) dudit second élément de boucle de jonction (50b) présentant un second orifice de réception (53b) délimité dans celui-ci et au moins une gorge légèrement courbe (54b) conformée dans le second orifice de réception (53b) pour recevoir l'au moins une partie en saillie (42b) de ladite seconde fiche (41 b) pour fixer ledit second élément de boucle de jonction (50b) audit élément de boucle intermédiaire (40) pour permettre au second élément de boucle de jonction (50b) d'être déformé par rapport audit élément de boucle intermédiaire (40) selon un angle prédéterminé après insertion de ladite seconde fiche (41 b) dans le second orifice de réception (53b) de la second unité de raccordement (56b) dudit second élément de boucle de jonction (50b).

8. Boucle de sécurité (10a) selon la revendication 7, dans laquelle ledit élément de boucle intermédiaire (40) comporte une pluralité parties portantes (43a, 43b) incurvées vers l'intérieur respectivement prévues sur les faces supérieure et inférieure de ladite première fiche (41a) et de ladite seconde fiche (41b) ; dans laquelle la première unité de raccordement (56a) dudit premier élément de boucle de jonction (50a) et la second unité de raccordement (56b) dudit second élément de boucle de jonction (50b) présentent chacun une partie portante (55a, 55b) incurvée vers l'extérieur qui est respectivement en butée contre les parties portantes (43a, 43b) incurvées vers l'intérieur dudit élément de boucle intermédiaire (40) lorsque dite la première fiche (41a) et ladite seconde fiche (41 b) dudit élément de boucle intermédiaire (40) sont respectivement insérées dans le premier orifice de réception (53a) dudit premier élément de boucle de jonction (50a) et le second orifice de réception (53b) dudit second élément de boucle de jonction (50b).

9. Boucle de sécurité (10a) selon la revendication 7, dans laquelle le nombre d'au moins une gorge légèrement courbe (54a, 54b) et le nombre d'au moins une partie en saillie (42a, 42b) sont égaux à deux, et dans laquelle les deux gorges légèrement courbes (54a, 54b) et les deux parties en saillies (42a, 42b) sont prévues de manière symétrique sur deux faces latérales opposées.

10. Boucle de sécurité (10a) selon la revendication 7, dans laquelle ladite première fiche (41a) et ladite seconde fiche (42b) présentent chacune une face supérieure et une face inférieure, et dans laquelle une desdites parties en saillies (42a, 42b) de chacune desdites première fiche (41 a) et seconde fiche (41 b) est respectivement prévue sur chacune des faces supérieure et inférieure ; dans laquelle ledit premier orifice de réception (53a) et ledit second orifice de réception (53b) présentent chacun une face supérieure et une face inférieure, et dans laquelle une desdites gorges légèrement courbes (54a, 54b) dudit premier élément de boucle de jonction (50a) et dudit second élément de boucle de jonction (50b) est prévue dans la face supérieure et la face inférieure de chacun desdits premier orifice de réception (53a) et second orifice de réception (53b).

11. Boucle de sécurité (10a) selon la revendication 10, dans laquelle l'au moins une partie en saillie (42a, 42b) comprend deux parties en saillies (42a, 42b) prévues de manière bilatérale respectivement sur chacune des faces supérieure et inférieure, et dans laquelle l'au moins une gorge légèrement courbe (54a, 54b) comprend deux gorges légèrement courbes (54a, 54b) prévues de manière bilatérale respectivement au niveau de chacune des faces supérieure et inférieure.

12. Boucle de sécurité (10a) selon la revendication 7, dans laquelle ledit angle prédéterminé est un angle de 60 degrés.
